# EUROPEAN PATENT APPLICATION

(11) **EP 0 856 997 A2**
(43) Date of publication of application: **05.08.1998**
(21) Application number: 98101476.4
(22) Date of filing: 28.01.1998
(51) Int. Cl.: H04Q 7/18

(54) **Radio selective call receiver**

(30) Priority: 29.01.1997 JP 15205/97
(71) Applicant: NEC CORPORATION, Tokyo (JP)
(72) Inventor: Aoshima, Takashi, Kakegawa-shi, Shizuoka (JP)
(74) Representative: Baronetzky, Klaus, Dipl.-Ing.

(57) **Abstract**

In a selective call receiver having a memory (206) for storing a predetermined number of pieces of data, the memory is searched for a piece of receiver data conveyed by a selective calling signal (S407). When the received piece of data fails to be found, the received piece of receiver data is stored onto the memory (S408) and, otherwise the received piece of receiver data is canceled (S409).

## Description

The present invention relates to a radio selective call receiver and, more specifically, to a radio selective call receiver incorporating a memory for storing receiver data such as a new ID number, network update information or the like which is received from a radio base station.

In a radio selective calling system, there are cases where a common carrier transmits a new ID number or updated network information to a radio terminal through a radio base station in order to start a new service or improve existing services. The received new data is automatically stored onto a memory built into the radio terminal. Such a remote maintenance affords convenience to not only a subscriber but also the common carrier. The subscriber can obtain a new service without doing anything and the common carrier can provide the new service to the subscriber without sending a maintenance service person to the subscriber.

In cases where the new ID number for a new service is transmitted to a terminal and is added to the memory, the new ID number is usually transmitted a plurality of times (for example, in 10-minite intervals) in consideration of the terminal being out of the service area. In this case, each time the new ID number is received, it is stored onto the memory. Therefore, the same ID number may be repeatedly stored in a plurality of areas of the memory, resulting in reduced available memory capacity.

An object of the present invention is to provide a radio selective call receiver and a receiving control method which can achieve effective use of a memory.

Another object of the present invention is to provide a radio selective call receiver and a receiving control method which can avoid causing the same data to be repeatedly stored onto a plurality of memory areas.

According to an aspect of the invention, in a selective call receiver having a memory for storing a predetermined number of pieces of data; when a selective calling signal is received, the memory is searched for a received piece of data conveyed by the selective calling signal, and the received piece of data is stored onto the memory only when the received piece of data fails to be found.

The search may be performed by reading one piece of data from the memory in inverse time sequence from the latest one which has been stored onto the memory and then comparing the one piece of data with the received piece of data.

According to another aspect of the present invention, when receiving a calling signal conveying one of a piece of message data and a piece of receiver data, when it is determined that a piece of receiver data is received, the memory is searched for a received piece of receiver data conveyed by the calling signal, and the received piece of receiver data is stored onto the memory only when the received piece of receiver data fails to be found in the memory.
FIG. 1 is a block diagram showing an embodiment of a radio selective call receiver according to the present invention;
FIG. 2 is a schematic diagram showing an example of memory arrangement of a memory in the radio selective call receiver of FIG. 1;
FIG. 3 is a diagram showing the frame format of a selective calling signal; and
FIG. 4 is a flowchart showing an embodiment of a receiving control method according to the present invention.

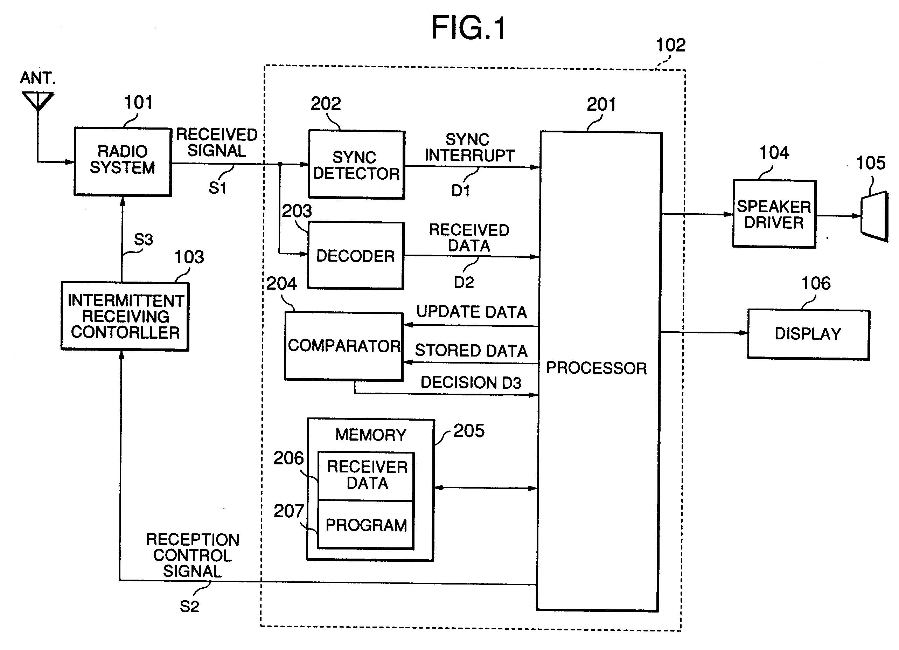

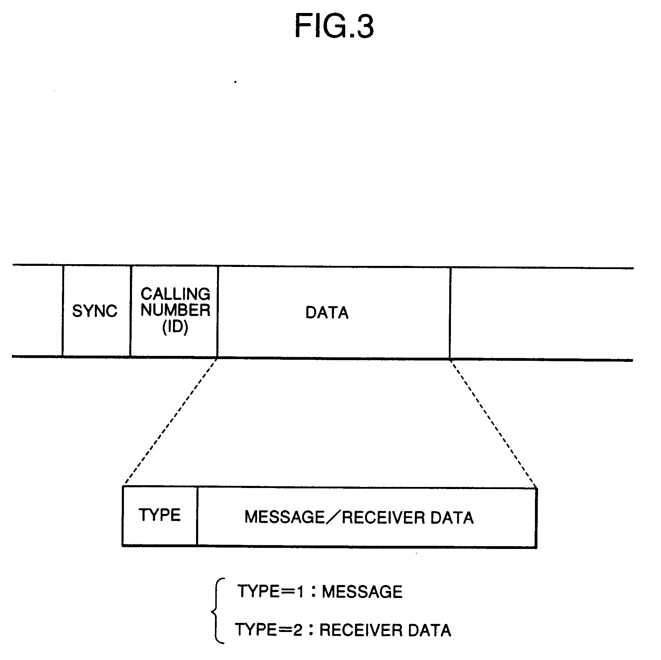

Referring to FIG. 1, a selective call receiver according to the present invention is comprised of a radio system 101, a controller 102, an intermittent receiving controller 103. The radio system 101 receives a radio selective calling signal of a given format (see Fig. 3) from a radio base station (not shown) through a receiving antenna. The received radio signal is amplified and demodulated into a baseband received signal S₁.

The controller 102 performs predetermined operations according to programs as described later. Further, the controller 102 outputs a reception control signal S₂ to the intermittent receiving controller 103 which, under the control of the controller 102, outputs an intermittent receiving control signal S₃ to the radio system 101. Therefore, the radio system 101 performs the intermittent receiving operation at a receiving channel. The intermittent receiving controller 103 may control channel selection of the radio system 101 under the control of the controller 102.

The controller 102 is connected to a speaker driver 104 which drives a speaker 105 and further to a display 106 such as a liquid-crystal display. Under the control of the controller 102, the speaker 105 makes a beep to inform the user of incoming call and the display 106 displays received messages or necessary information on screen. It should be noted that a message memory for storing received messages, a keypad as an input device, and other necessary components are omitted from the figure for simplicity.

The controller 102 controls the entire receiver operations including a receiving control according to the present invention, processing of received data, and an intermittent receiving control as will be described later. The controller 102 includes a processor 201 which is connected to a sync signal detector 202, a decoder 203, a comparator 204, and a memory 205. The memory 205 includes an writable area 206 for storing registered data (here, registered ID numbers) and a read-only area 207 for storing programs which are used to perform the receiving operation and other necessary operations.

The sync signal detector 202 detects a sync signal (SYNC) of each frame from the received signal S₁ (see Fig. 3). Upon detecting the sync signal, the sync signal detector 202 outputs a sync interrupt signal D₁ to the processor 201. The decoder 203 performs a decoding operation with error-correction of the received signal S₁ and then outputs decoded and error-corrected data D₂ to the processor 201.

The processor 201 performs call detection by searching the writable area 206 of the memory 205 for a calling number (or address) included in each frame of the received signal S₁. When the received calling number is found in the writable area 206 of the memory 205, the processor 201 determines which of a message and receiver data the received data following the received calling number is. If it is a message, the processor 201 controls the speaker driver 104 and the display 106 to inform the user of the incoming call and to display a received message on screen.

If the received data is receiver data such as a new ID number, the processor 201 uses the comparator 204 and the memory area 206 to perform receiver data searching. Under the control of the processor 201, the comparator 204 makes a decision as to whether the received receiver data included the received data D₂ is coincident with one of the registered data stored in the writable area 206 of the memory 205. Depending on the decision result D₃ received from the comparator 204, the processor 201 stores the receiver data onto the memory area 206 of the memory 205 or cancels registration of the same.

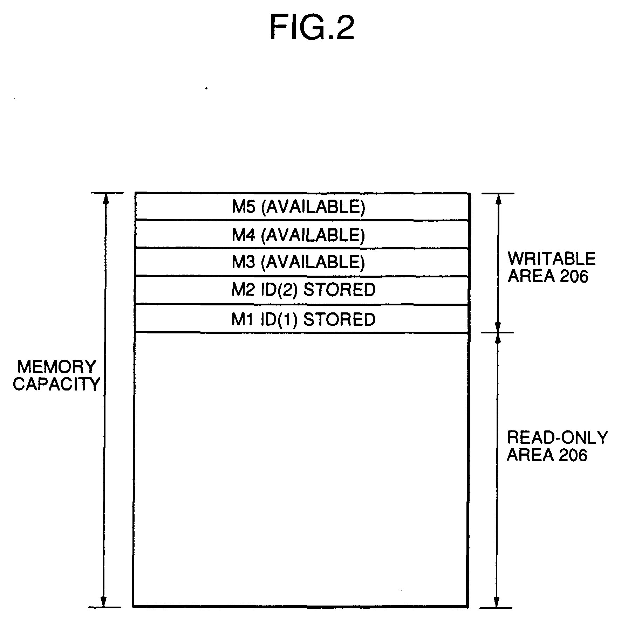

Referring to Fig. 2, the writable area 206 of the memory 205 can store a plurality of pieces of receiver data (here, five ID numbers). In this figure, the first area M1 of the writable area 206 has stored the ID number ID(1) which is previously assigned to the user and the second area M2 stores another ID number ID(2) which is added for a new service. The remaining areas M3-M5 are available. Preferably, the registered receiver data such as ID numbers are stored in time sequence.

The read-only area 207 stores the programs including the intermittent receiving control program according to the present invention. The processor 201 performs necessary operations by running necessary programs read from the read-only area 207 of the memory 205.

Referring to Fig. 3, each frame of a selective calling signal conveys a sync signal (SYNC), a calling number (ID) and a data field including a data type flag (TYPE) followed by a message or receiver data. For example, in the case of TYPE=1, the following data is a pager message which is to be displayed on screen with beep sound and, in the case of TYPE=2, the following data is receiver data such as a new ID number or network update information. Therefore, the selective call receiver can determine whether received data is a pager message or receiver data by checking the data type flag TYPE.

The receiving control of the controller 102 will be described hereinafter in the case of the receiver data being a new ID number. It is the same with other receiver data such as network information.

### RECEIVING CONTROL

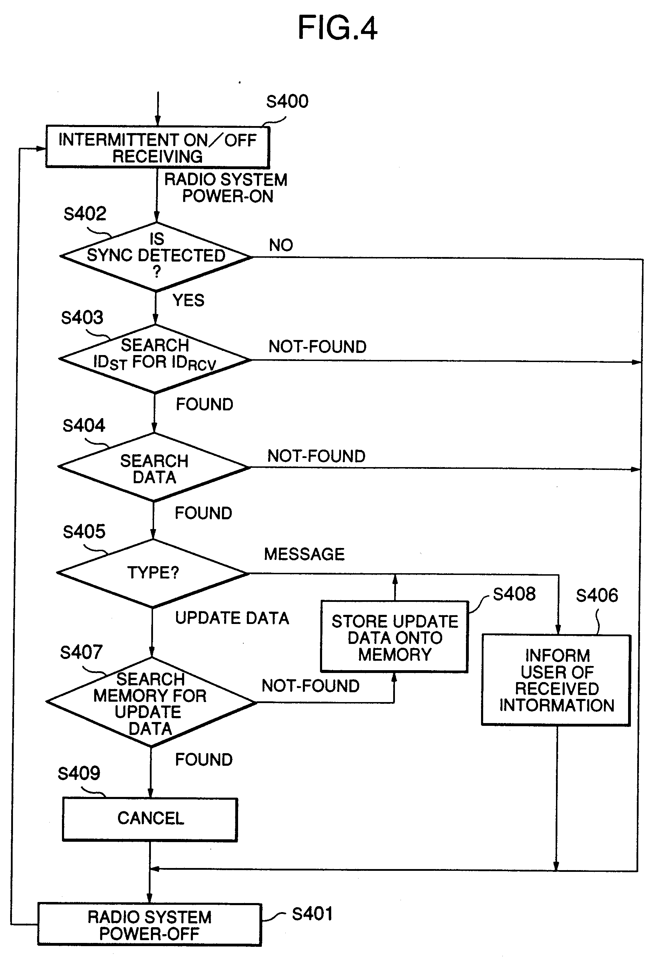

Referring to Fig. 4, when power is turned on, the processor 201 instructs the receiving controller 104 such that the radio system 101 is intermittently supplied with power to perform intermittent receiving in predetermined time intervals (steps S400 and S401). When the power is supplied to the radio system 101, the following steps are performed.

When the intermittent receiving operation is started, the processor 201 waits for sync interrupt signal D₁ to be received from the sync detector 202 (step S402). If no sync interrupt signal D₁ is received within a predetermined time period (NO in step 402), the power supplied to the radio system 101 is turned off (step S401).

When the sync signal is detected, that is, sync interrupt D₁ occurs (YES in step 402), the processor 201 detects a calling number ID_{RCV} from the frame of the received data D₂ and starts searching the registered ID numbers ID_{ST} of the writable area 206 of the memory 205 for the received calling number ID_{RCV} (S403). More specifically, the first ID number ID(1) is read from the writable area 206 and is compared with the received calling number ID_{RCV}. If it is not matched with the received calling number ID_{RCV}, the next ID number ID(2) is read and compared with the received calling number ID_{RCV}.

When a match in ID number is found (YES in step S403), the processor 201 searches the data field of the received data D₂ for data addressed to the receiver itself (step S404). When such data is found, the data type flag TYPE is read from the data and is checked (step S405). When the data type flag TYPE indicates that the following data is a pager message, the processor 201 controls the speaker driver 104 and the display 106 to inform the user of the incoming call and to display a received message on screen (step S406).

On the other hand, when the data type flag TYPE indicates that the following data is receiver data, the processor 201 starts searching the writable area 206 of the memory 205 for the received receiver data (S407). The details of the searching will be described hereinafter.

Assuming that an ID number is received as the receiver data, the processor 201 stores the received ID number onto one register of the comparator 204. Subsequently, the processor 201 reads the latest registered ID number (here, ID(2)) from the writable area 206 and then stores it to the other register of the comparator 204. The comparator 204 compares the received ID number with the latest registered ID number and outputs its decision result D₃ indicating one of coincidence and non-coincidence to the processor 201. If the received ID number is coincident to the latest registered ID number, the comparator 204 outputs the decision result D₃ indicating coincidence to the processor 201. If the received ID number is not coincident to the latest registered ID number, the processor 201 reads the second latest ID number (here, ID(1)) and then stores it to the other register of the comparator 204. In this manner, the registered ID numbers stored in the writable area 206 are sequentially compared with the received ID number in inverse time sequence unless they are coincident.

When the received receiver data is not found in the writable area 206 in the searching (S407) as described above, the processor 201 stores the received receiver data onto the writable area 206 of the memory 205 (step S408). After the receiver data has been stored, the processor 201 controls the speaker driver 104 and the display 106 to inform the user of updating receiver data and to display the receiver data, for example, the new ID number, on screen (step S406).

On the other hand, when the received receiver data is found in the writable area 206 as described above, the comparator 204 sends the decision result D₃ indicating coincidence back to the processor 201. When receiving the decision result D₃ indicating coincidence, the processor 201 determines that the received receiver data has been already stored in the writable area 206 of the memory 205. Therefore, the processor 201 cancels registration of the received receiver data onto the writable area 206 and, at the same time, the processor 201 clears the registers of the comparator 204 (step S409).

As described above, received receiver data is sequentially compared with the registered data and, if the registered data identical to the received receiver data is found, the received receiver data is not stored in the memory. Therefore, it can avoid causing the same data to be repeatedly stored onto a plurality of memory areas, resulting in effective use of memory.

Further, since the latest registered data is read and compared with the received receiver data, the data comparison can be performed rapidly in the case where the receiver data is transmitted a plurality of times.

## Claims

1. A selective call receiver for receiving a selective calling signal conveying a piece of data, the selective call receiver comprising a memory (206) for storing a predetermined number of pieces of data, characterized by:
a search controller (201, 204) for searching the memory for a received piece of data conveyed by the selective calling signal; and
a controller (204) for storing the received piece of data onto the memory only when the received piece of data fails to be found.

2. The selective call receiver according to claim 1, wherein the controller stores the received piece of data onto the memory when the received piece of data fails to be found and, otherwise the controller cancels the received piece of data.

3. The selective call receiver according to claim 1, wherein the memory includes a predetermined capacity of memory area for storing a piece of data which is used to obtain a system service, wherein the received piece of data is stored onto the predetermined capacity of memory area of the memory only when the received piece of data is not coincident with any piece of data stored in the memory.

4. The selective call receiver according to claim 3, wherein a piece of data stored in the predetermined capacity of memory area is an identification number required for the system service.

5. The selective call receiver according to any of claims 1-4, wherein the search controller reads one piece of data from the memory in inverse time sequence from the latest one which has been stored onto the memory and then the one piece of data is compared with the received piece of data.

6. A selective call receiver for receiving a calling signal conveying one of a piece of message data and a piece of receiver data, the selective call receiver comprising a memory (206) for storing a predetermined number of pieces of receiver data, characterized by:
a discriminator (201, S405) for discriminating between a piece of message data and a piece of receiver data;
a search controller (201, 204) for searching the memory for a received piece of receiver data conveyed by the calling signal; and
a controller (201) for storing the received piece of receiver data onto the memory only when the received piece of receiver data fails to be found in the memory.

7. The selective call receiver according to claim 6, wherein the search controller reads one piece of receiver data from the memory in inverse time sequence from the latest one which has been stored onto the memory and then the one piece of receiver data is compared with the received piece of receiver data.

8. The selective call receiver according to claim 6, wherein a piece of message data conveyed in the calling signal is displayed on screen with informing of incoming call.

9. A method for receiving a selective calling signal conveying a piece of data in a selective call receiver having a memory (206) for storing a predetermined number of pieces of data, the method characterized by the steps of:
a) (S407) searching the memory for a received piece of data conveyed by the selective calling signal;
b) (S408) storing the received piece of data onto the memory when the received piece of data fails to be found in the memory; and
c) (S409) canceling the received piece of data when the received piece of data is found in the memory.

10. The method according to claim 9, wherein the memory includes a predetermined capacity of memory area for storing a piece of data which is used to obtain a system service, wherein, in the step b), the received piece of data is stored onto the predetermined capacity of memory area of the memory only when the received piece of data is not coincident with any piece of data stored in the memory.

11. The method according to claim 10, wherein a piece of data stored in the predetermined capacity of memory area is an identification number required for the system service.

12. The method according to any of claims 9-11, wherein the step b) comprises the steps of:
reading one piece of data from the memory in inverse time sequence from the latest one which has been stored onto the memory; and
comparing the one piece of data with the received piece of data.

13. A method for receiving a calling signal conveying one of a piece of message data and a piece of receiver data in a selective call receiver having a memory (206) for storing a predetermined number of pieces of receiver data, the method characterized by the steps of:
a) (S405) discriminating between a piece of message data and a piece of receiver data;
b) (S407) searching the memory for a received piece of receiver data conveyed by the calling signal;
c) (S408) storing the received piece of receiver data onto the memory when the received piece of receiver data fails to be found in the memory; and
d) (S409) canceling the received piece of receiver data when the received piece of receiver data is found in the memory.

14. The method according to claim 13, wherein the step b) comprises the steps of:
reading one piece of receiver data from the memory in inverse time sequence from the latest one which has been stored onto the memory; and
comparing the one piece of receiver data with the received piece of receiver data.
